# EUROPEAN PATENT SPECIFICATION

(11) **EP 0 531 815 B1**
(45) Date of publication and mention of the grant of the patent: **07.01.1999**
(21) Application number: 92114632.0
(22) Date of filing: 27.08.1992
(51) Int. Cl.: G06K 11/06, G06K 11/16, G06F 3/033, G01L 1/22, G08C 21/00

(54) **Strain-gauge mounting for force-sensing touch-screen**
Befestigung eines Dehnungsmessstreifens für einen berührungs-empfindlichen Bildschirm
Dispositif de fixation pour une jauge de contrainte pour un écran sensible au touché

(30) Priority: 09.09.1991 US 758981
(43) Date of publication of application: 17.03.1993
(73) Proprietor: INTERNATIONAL BUSINESS MACHINES CORPORATION, Armonk, NY 10504 (US)
(72) Inventor: Garwin, Richard Lawrence, Scarsdale, New York 10583 (US); Levine, James Lewis, Yorktown Heights, New York 10598 (US)
(74) Representative: Teufel, Fritz, Dipl.-Phys.

(56) References cited:
- EP-A- 0 497 398
- FR-A- 2 605 735
- US-A- 4 918 262
- PATENT ABSTRACTS OF JAPAN, unexamined applications, P field, vol. 10, no. 348, November 22, 1986 THE PATENT OFFICE JAPANESE GOVERNMENT page 106 P 519 & JP-A-61 148 522 ( NEC HOME ) 7 July 1986
- PATENT ABSTRACTS OF JAPAN, unexamined applications, P field, vol. 7, no. 206, September 10, 1983 THE PATENT OFFICE JAPANESE GOVERNMENT page 50 P 222 & JP-A-58 101 331 ( NIPPON ) 16 June 1983
- PATENT ABSTRACTS OF JAPAN, unexamined applications, P field, vol. 7, no. 206, September 10, 1983 THE PATENT OFFICE JAPANESE GOVERNMENT page 50 P 222 & JP-A-58 101 332 ( NIPPON ) 16 June 1983
- PATENT ABSTRACTS OF JAPAN, unexamined applications, P field, vol. 8, no. 153, July 17, 1984 THE PATENT OFFICE JAPANESE GOVERNMENT page 116 P 287 & JP-A-58 146 450 ( HITACHI ) 26 March 1984

## Description

This invention relates to strain-gauge mounting for detecting a force applied orthogonal to the surface of a touch-screen panel or electro-optical data display and more particularly, to a resilient single cantilever spring mounting for supporting the touch-screen under various mechanical loads and vibration during shipping and use modes.

In US-A-4,121,049 which issued on October 17, 1978 to F. W. Roeber entitled "Position and Force Measuring System", a position and force measuring system is described having a rigid contoured or flat plate which is fixed to another rigid plate with a spring such as in the form of a flexible column, either solid or hollow and including a minimum of three sensors located at selected points for measuring either strain in the mechanism or intra surface distances. The springs may each be shaped as a half of a hollow cylinder with extended flanges connected to the edges of the flanges to surfaces of the rigid plates. The radius of curvature, length and thickness of the spring may be chosen according to the size and weight of the device and the input forces associated with the application.

In US-A-4 355 202 which issued on October 19, 1982 to John DeCosta et al. entitled "Mounting Arrangement For a Position Locating System", a mounting arrangement is described for a position locating system in which the area of the force sensing device is effectively reduced to a predetermined point of action to increase the accuracy of the measurement of the location of the force on a touch surface. The force sensing device may be a piezo-electric transducer in the form of disk, a strain gauge sensor, or a variable capacitance transducer.

In US-A-4 550 384 which issued on October 29, 1985 to K. Kimura entitled "Touch System Coordinates Input Apparatus", a touch panel is described having four slots each starting from the edge and parallel to a respective side of the panel to provide straining portions which are strained when a force is applied to the panel. Further, cantilever beams are shown which are deflected by a needle as the panel is pushed.

In US-A-4 558 757 which issued on December 17, 1985, to Y. Mori et al. entitled "Position Coordinate Input Device", a position coordinate input device is described comprising an input plate; four elastic plates which are provided at four positions of said input plate, respectively; and four stress detectors for detecting component forces of an external force applied to a point on the input plate, respectively, which are provided on the elastic plates, respectively, whereby coordinates of the point of application of the external force are detected and data of the coordinates are transmitted to other apparatuses.

In US-A-4 697 049 which issued on September 29, 1987 to H. Peemolle et al. entitled "Device For Producing X-Y Coordinate Addresses For A Picture Screen", a device for producing x-y coordinate addresses for a picture screen is described comprising three plates, an operating plate and two auxiliary plates, disposed parallel to the operating plate. The three plates are interconnected by means of resilient edge supports, and force measuring sensors are positioned between the plates along the edges at a midway point.

In JP-A-59 17679 by T. Maeoka entitled "Input Device of Coordinate", published January 28, 1984, a pressure detecting type coordinate input device is described comprising an input plate to input positional information or handwriting characters, four supporting means for supporting the input plate, four pressure detectors between the input plate and a face plate, and regulating means to regulate the positions of the supporting means. Spring members are attached to the four supporting means, respectively, and fitted to prevent spring-back at the depression to the input plate by applying pre-load to the pressure detectors. A damping means to absorb oscillation of the input plate is also provided.

EP-A-0497 398, which is part of the prior art according to article 54(3) EPC, discloses a force detector (5) fitted with a blade carrying a strain gauge and with a fixed support and a mobile support in which are respectively accommodated a first and second end of the said blade, the relative displacements of the two supports enabling the forces applied to the mobile support to be detected. In order to accommodate at least one of the said ends in its own support, the said support comprises a U-shaped member, between the two branches of which is inserted the said end bearing on slightly elastic contacts. A tactile screen is formed with the help of a plurality of such force detectors accommodated in a mobile plate and a fixed frame. By coupling the two latter elements by means of suspensions and elastic fasteners, the pressure forces acting on the mobile plate are, in the vertical position, decoupled from the intrinsic weight of the latter.

Patent abstracts of Japan Vol. 8, No. 153 (P-287), 17/07/1984 & JP-A-59/52343 discloses a strain-gauge mounting for a touch type coordinate input device. A cantilever is fixed to an attachment metallic parts of a frame at the side opposite to a flange, and the part of a plate spring is set in parallel to the frame. Strain gauges are attached to both sides of the spring, and a component force generated at a fulcrum supported by an attachment skew is transmitted to the plate spring through the flange. The bending distortion of the spring generated by the component force is measured by the gauge.

In accordance with the present invention, an apparatus is provided for supporting a portion of a touch panel or touch-sensitive surface and for measuring the force at the apparatus due to a force applied to the touch-panel as defined in claim 1.

It is an object of the invention to provide a strain-gauge mounting which is less sensitive to distortions of the supporting structure due to touching the bezel, tilting the display, or the gradual warping of the supporting structure.

It is a further object of the invention to provide a strain-gauge mounting which allows one end of each cantilever to rotate more-or-less freely, thus minimizing the effects of structural distortion.

It is a further object of the invention to provide a strain-gauge mounting which will minimize the effects of structural distortion without introducing sensitivity to tangential forces, i.e. force in the plane of a touch-panel at times the touch-panel is deflected and without introducing artifacts such as stiction and rattling of an actual pinned joint or a dead zone due to mechanical linkage.

It is a further object of the invention to provide a strain-gauge mounting which will withstand various mechanical loads and vibration during shipping and use.

It is a further object of the invention to provide a strain-gauge mounting which will permit lateral movement of the mounting in both the X and Y directions in the plane of the touch-panel such as .8 mm while providing accurate indications of force.

It is a further object of the invention to provide a strain-gauge mounting which includes a cantilever beam affixedly attached at a first end and attached to a torsion bar at the second end which provides an insignificant bending moment of 5 percent or less to the cantilever beam.

It is a further object of the invention to provide a cantilever beam attached to a torsion bar at one end wherein the torsion bar is supported by arms flexible to bending about an axis substantially orthogonal to the plane of the cantilever beam.

It is a further object of the invention to provide a cantilever beam attached to a torsion bar at one end wherein the torsion bar is supported by two arms, each arm having a first region which may be twisted by rotation of the beam end and may only bend about an axis substantially orthogonal to the plane of the cantilever beam.

These objects are solved basically by the solution given in the independent claims.

Further advantageous embodiments are laid down in the subclaims.

The invention will be shown in more detail in the following description in accordance with the drawing in which embodiments are shown in which:
- Fig. 1: is a first embodiment of the invention;
- Fig. 2: is a cross-section view along the lines 2-2 of Fig. 1;
- Fig. 2A: is a perspective view of torsion bar 20 shown in Fig. 1;
- Fig. 3: is a second embodiment of the invention;
- Fig. 4: is a cross-section view along the line 4-4 of Fig. 3;
- Fig. 5: is a third embodiment of the invention;
- Fig. 6: is a cross-section view along the lines 6-6 of Fig. 5.;
- Fig. 7: is a cross-section view along the lines 7-7 of Fig. 5;
- Fig. 8: is a cross-section view of a fourth embodiment of the invention;
- Fig. 9: is a fifth embodiment of the invention;
- Fig. 10: is a cross-section view along lines 10-10 of Fig. 9; and
- Fig. 11: is an enlarged view of a portion of Fig. 1 showing the strain gauges interconnected on the beam.

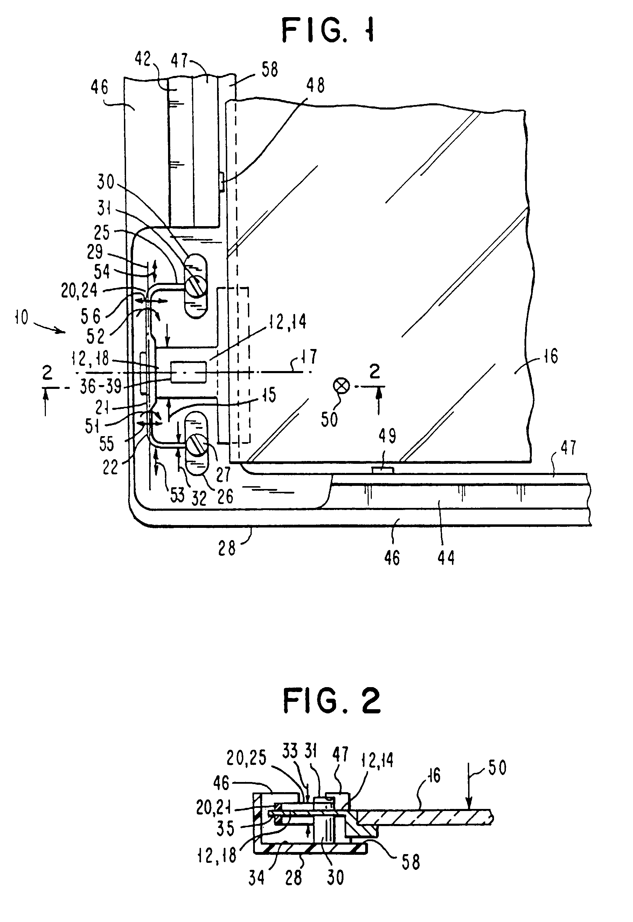

Referring now to the drawing and in particular to Fig. 1, strain-gauge mounting 10 is shown comprising a beam spring or beam 12 having a first end 14 rigidly attached to a transparent touch-panel 16. Beam 12 may be flat having a thickness of about .76 mm (.030 inches). Beam 12 may be made of stainless steel, spring steel, or an alloy of aluminum. The width of beam 12 as shown by arrow 15 is selected to provide lateral support to touch-panel 16, i.e., forces in the plane of touch-panel 16. Beam 12 may be attached to touch-panel 16 by gluing, clamping or some other means suitable to make a rigid connection between beam 12 and touch-panel 16.

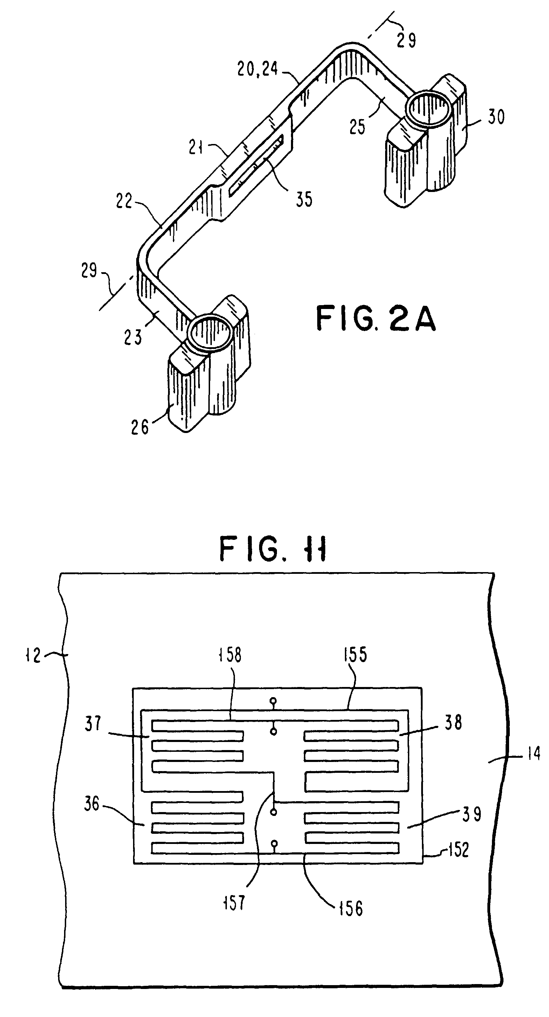

Beam 12 has a longitudinal axis 17 and second end 18 which extends to or through slot 35 of torsion bar 20 shown in Figs. 2 and 2B. Fig. 2 is a perspective view of torsion bar 20 shown in Fig. 1. Torsion bar 20 functions to hold or support second end 18 at a first position in elevation with respect to the plane of the touch-panel without applying bending moments in excess of, for example, 5 percent to beam 12 compared to bending moments from the other end of beam 12. Torsion bar 20 may be rigid in the region of beam 12 as shown by reference number 21 in Fig. 1. Torsion bar 20 may have a predetermined torsion or torque constant and is flexible in regions 22-25 permitting region 21 to twist or rotate as beam 12 rotates in the range from 0 to 5 degrees with very little bending moment, for example 5 percent or less, than that of beam 12 at times when touch panel 16 is deflected. Torque is defined as the tendency to produce rotation or torsion that consists of the product of the force and the perpendicular distance from the line of action of the force to the axis of rotation. A moment is defined as the product of a quantity such as a force and the distance to a particular axis or point and therefore is the tendency to produce motion especially about a point or axis. Torsion bar 20, and especially regions 21, 22 and 24 has a longitudinal axis 29 which passes through regions 22 and 24 and about which rotation or twisting of regions 22 and 24 occurs.

Regions 22 and 23 are transverse to one another and, as shown in Fig. 1, are orthogonal to one another. Regions 24 and 25 of torsion bar 20 are transverse to one another and as shown in Fig. 1 are orthogonal to one another. Regions 22-25 may have the same thickness shown by arrow 32 in Fig. 1 and height shown by arrow 33 in Fig. 2 wherein the height is several times more than the thickness, for example, in the range from 3 to 10 times the thickness. Region 23 is supported by boss or column 26 which has a hole for receiving bolt or screw 27. Bolt or screw 27 firmly attaches boss or column 26 to bezel or frame 28. Bosses 26 and 30 may be fitted with projections (not shown) that engage holes in frame 28 to prevent rotation of bosses 26 and 30 due to forces from torsion bar 20. Region 25 is held in place by boss or column 30 which has a hole for bolt or screw 31 which is attached to bezel or frame 28. Bosses 26 and 30 support torsion bar 20 and hold torsion bar 20 at a fixed distance above surface 34 of bezel or frame 28. Torsion bar 20 and bosses 26 and 30 may be fabricated as one intregral part of polymeric material, plastic, composite material or metal, for example, by injection molding of plastic. The height of torsion bar 20 as well as its width, or thickness, is selected so that torsion bar 20 will not be deflected or moved towards surface 34 of frame 28. Beam 12 functions as a single cantilever beam and has positioned thereon strain gauges 36-39, which is illustrated in more detail in Fig. 11. Wires from strain gauges 36-39 (not shown) may be placed in channel 42 and 44 of frame 28 to interconnect with an electrical circuit for providing a signal indicative of the force on beam 12.

Fig. 2 is a cross section view along the lines 2-2 of Fig. 1. Fig. 2 shows beam 12 rigidly attached to touch panel 16 at a first end 14. The second end of beam 12 passes through the center of torsion bar 20 at region 21. Region 21 is relatively inflexible. Beam 12 may be attached to region 21 by inserting and gluing or by bending the end of beam 12 to provide a surface to mechanically attach to torsion bar 20. Beam 12 may be indented in its width at region 21 to provide a positive stop as it passes through a slot 35 parallel to the plane of touch-panel 16 having a width corresponding to the width of beam 12 at the indentation. Thus the position of torsion bar 20 with resect to second end 18 may be determined by the indent of the width in beam 12. Fig. 2 shows surface 34 which is carved out of frame 28 to provide a flat area for mounting torsion bar 20 and bosses 26 and 30. The frame may have horizontal surfaces 46 and 47 which are at the same height as shown in Fig. 2 or the surfaces may be contoured to a desired shape.

Touch-panel 16 may be transparent glass 0.125 inches thick, or may be of some other material for example a plastic sheet, plexiglass, wood or metal for transferring force to the edges of the panel. Touch-panel 16 may be a frame having in its interior a flexible material. The flexible material may be elastic such as elastomeric or polymeric so long as the there is sufficient clearance behind the flexible material to permit the expected forces to be applied to the flexible material without touching objects behind it.

The touch panel may be placed in front of a display or an image requiring the material or areas therein to be transparent, or, the touch panel may have an image or marking thereon permitting the touch-panel to be translucent or opaque. Or, the touch-panel may be opaque with no markings thereon. Touch-panel 16 may be flat or may be contoured or have a curved surface. Touch-panel 16 may be any desired electro-optical display such as a cathode ray tube (CRT), a cold plasma display screen, a liquid crystal display (LCD) light emitting diode displays (LEDs), electroluminescent panels, incandescent or neon bulb panels. The size and shape of torsion bar 20 as well as beam 12 would be adjusted to support the weight of touch-panel 16 whether it be a single pane of glass or a heavy cathode ray tube.

In operation, when a force is applied downward on touch-panel 16 as shown for example by arrow 50 in Figs. 1 and 2, touch-panel 16 will deflect downward causing beam 12 to bend as a cantilever. Second end 18 of beam 12 will cause region 21 to rotate as shown by arrows 51 and 52 which causes regions 22 and 24 to rotate likewise. The twisting of torsion bar 20 is accomplished in regions 22 and 24. The degree of bending of beam 12 is sensed by strain gauges 36 through 39 which provides an output indicative of the force applied to beam 12 from touch-panel 16.

A touch-panel may be supported with three strain-gauge mountings spaced apart to provide an indication of force on each mounting wherein algebraically the center of the force may be determined. Typically, however, four strain-gauge mountings are used to support a touch-panel. The touch-panel is normally rectangular in shape with two strain-gauge mountings 10 positioned on one edge at the corners of the touch-panel 16 with the other two strain-gauge mountings 10 positioned on the opposite edge at the corners of the touch-panel 16. It is understood that the touch-panel 16 may be square, rectangular, circular or of any other pattern so long as at least three strain-gauge mountings 10 are positioned spaced apart to support touch-panel 16. The position of applied force may be determined by the relative force exerted on each strain-gauge mounting 10.

A practical problem involved with mounting a touch-panel 16 or an electro-optical display or CRT is that inertial forces, exerted by the panel or display during shipping, may damage the touch-sensors and/or their mounts. Therefore, strain-gauge mounting 10 is designed to allow controlled movements in the plane of the touch surface, the movement being limited to a safe amount by pre-positioned stops 48 and 49 attached to or built into frame 28 without affecting the performance of torsion bar 20 when force is applied to touch-panel 16 normal to its surface. The design tolerances ensure that the touch-panel 16 will be out of contact with frame 28 during normal operation, in order that ordinary touch forces will be transferred to strain gauge mounting 10 as required for measuring the touch force. Potentially damaging forces will be transferred to frame 28 by stops 48 and 49 and surface 58. An additional stop attached to frame 28 (not shown) limits motion in the direction out of frame 28 by touch-panel 16. For example, a force applied in the plane of touch-panel 16 orthogonal to beam 12 will cause movement of torsion bar 20 shown by arrows 53 and 54. The torsion bar will bend in regions 25 and 23 to allow the movement of beam 12 in the direction shown by arrows 53 and 54. The interior of frame 28 may function as a stop to limit the motion of touch-panel 16. A typical stop would allow plus or minus .79 mm (1/32 of an inch) in all directions. Tangential force in the plane of touch-panel 16 in the direction of beam 12 will cause torsion bar 20 to deflect as shown by arrows 55 and 56. The movement of torsion bar 20 shown by arrows 55 and 56 is accomplished by bowing or bending in regions 22 and 24 of torsion bar 20. As shown in Fig. 1 it can be appreciated that the forces applied may be a combination of tangential forces in the direction of arrows 54 and 56 wherein the forces may be positive or negative to provide simultaneous movement of torsion bar 20 causing bending in regions 22-25. It is noted that excessive force applied to touch-panel 16 in the plane of touch-panel 16 will result in touch-panel 16 being deflected the full extent for example, .79 mm (1/32 of an inch) with the touch-panel 16 edge reaching a predetermined stops 48 and 49 on frame 28 which will further limit its motion. Sections 22-25 are also designed to be stiff in the direction perpendicular to the touch-surface, in order to fix the end positions 18 of beam 12 so that they will act as force sensors.

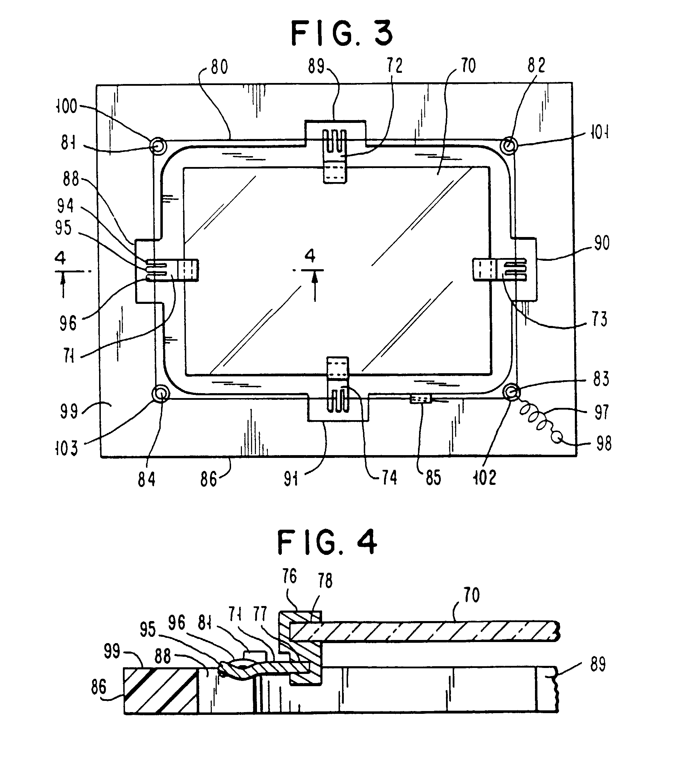

Fig. 3 shows a touch-panel 70 which may be rectangular in shape and have the attributes of touch-panel 16. The deflection of touch-panel 70 is detected by beams 71-74 which are rigidly attached to touch-panel 70. Fig. 4 is a cross section view along the lines 4-4 of Fig. 3 showing in more detail the rigid attachment of beam 71 to touch-panel 70. A rigid clip 76 as shown in Fig. 4 may be used to attach beam 71 and touch-panel 70 in respective slots 77 and 78. Beam 71 may be glued in slot 77 and touch-panel 70 may be glued in slot 78. Clip 76 may have a width equal to beam 71. The second end of beam 71 as well as beams 72-74 are attached to wire 80 which may be taut and strung around posts 81 through 84. Posts 81-84 may be held in place in frame 86 by rubber, elastomeric or polymeric bushings 100-103 seated in frame 86. Bushings 100-103 function to allow posts 81-84 to absorb loads in the plane of touch-panel 70, i.e. during shipment to prevent wires 80 from breaking.

Wire 80 may have a predetermined length or wire 80 may be positioned around posts 81 through 84 and then tightened under tension and crimped by clamp 85 to hold wire 80 together in a loop wherein the wire ends beyond clamp 85 may be cut. Posts 81 through 84 are shown positioned in frame 86. Frame 86 may have cut outs 88-91 to provide clearance for beams 71-74 respectively. The second end of beams 71-74 are attached to taut wire 80 by any convenient method such as, for example, by a clip, by fingers 94-96 at the end of beam 71 or by crimping, clamping or some other suitable mechanical means. The length of wire 80 between posts 84 to 81 for example, have sufficient length to allow the second end of beam 71 where it is attached to taut wire 80 to rotate at times touch-panel 70 is deflected without causing any bending movement on beam 71. In other words, beam 71 is free to rotate around top wire 80. Wire 80 may be maintained at a predetermined tension by attaching a spring 97 to wire 80 at post 83. The other end of spring 97 is attached to post 98 to apply a constant tension on wire 80. One or more strain gauges may be positioned on each of beams 71-74 to provide an indication of force on the respective beam. Taut wire 80 may rest on surface 99 of frame 86 as shown in Figs. 3 and 4 or taut wire 80 may be positioned above surface 99 of frame 86.

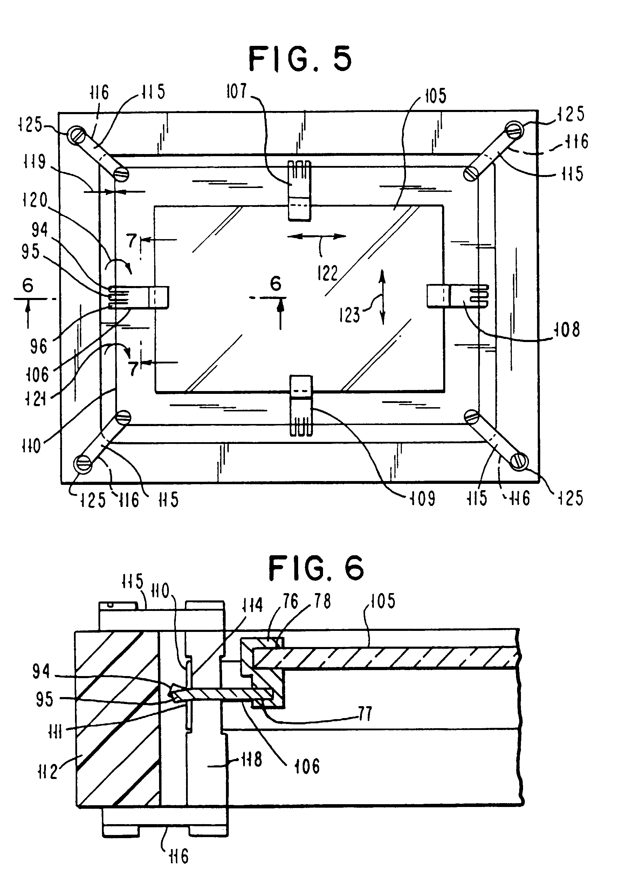

Fig. 5 shows a touch-panel 105 having beams 106-109 having a first end rigidly attached to touch-panel 105. Fig. 6 shows a cross-sectional view along the lines 6-6 of Fig. 5. Beams 106-109 may be attached to touch-panel 105 using clips 76 in a similar manner as shown in Figs 3 and 4. Beams 106-109 should be rigidly affixed to touch-panel 105. In Figs. 5 and 6 like references are used for functions corresponding to the apparatus shown Figs 3 and 4. In Fig. 5 a torsion bar comprises a taut strap 110 which may be a polymeric material, plastic, fabric, composite material of several materials or metal. Taut strap 110 may have a slot 111 therein for inserting the second end of beams 106-109 through slot 111 for attachment of beams 106-109 to taut strap 110. As shown in Fig. 5 fingers 94-96 may be crimped to provide a mechanical fastening of beam 106 to taut strap 110. Alternatively, a clip may be used which may be slid over taut strap 110 having a slot therein for receiving beam 106. Beam 106 may be glued in slot 111 or in the slot of the clip. The insertion of beam 106 into taut strap 110 is shown more clearly in Fig. 6. A frame 112 supports taut strap 110 by means of pin or roller 114 held in place by straps 115 and 116 shown in Fig. 6. Straps 115 and 116 are held to frame 112 and to roller 114 by screws or bolts shown in Fig. 6.

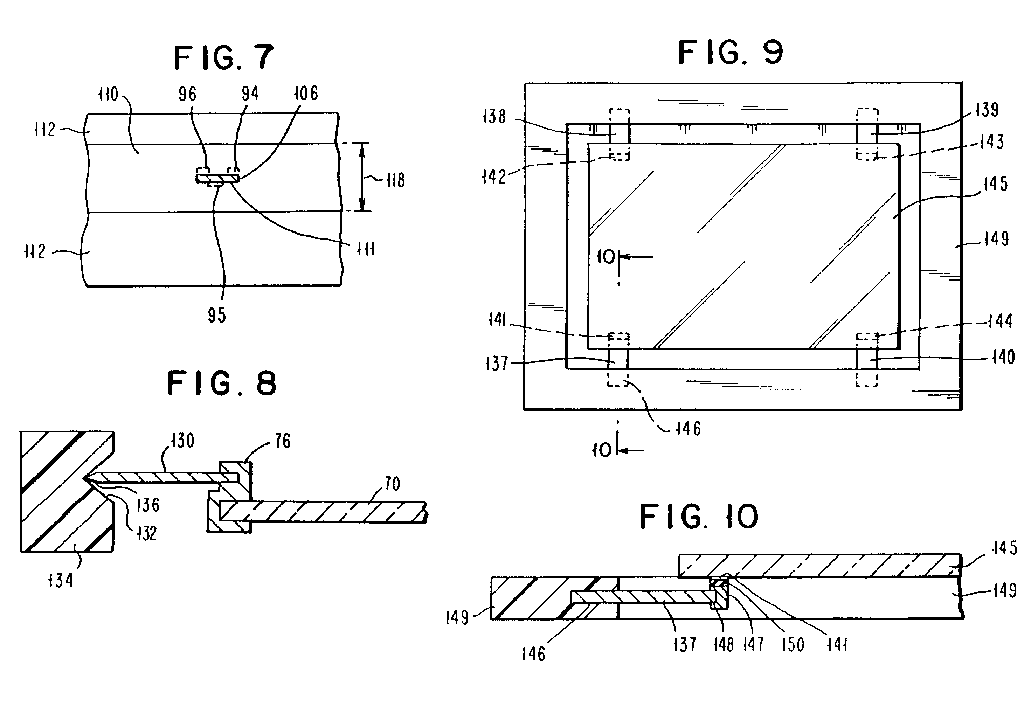

The screws or bolts holding straps 115 and 116 to frame 112 may be affixed to rubber, elastomeric or polymeric bushings 125 seated or fastened in frame 112. Bushings 125 function to allow straps 115 and 116 to absorb loads in the plane of touch-panel 105, i.e., during shipment to prevent taut strap 110 from breaking. Roller 114 may have an indent or a portion 117 thereof having a smaller diameter for receiving taut strap 110 and holding strap 110 in position. Taut strap 110, a torsion bar, functions to hold the end of beams 106-109 at a first position without applying torque, bending moments or torsion to beams 106-109 greater than a predetermined value at times force is not applied to touch-panel 105. At times touch-panel 105 is deflected downwards, spring or beam 106 will bend as a cantilever and taut strap 110 will also twist as beam 106 rotates at its end connecting to strap 110 as shown by arrows 120 and 121. Taut strap 110 has a height shown by arrow 118 in Fig. 7 and width or thickness shown by arrow 119 in Fig. 5 to prevent deflection of taut strap 110 in a direction normal to the plane of touch-panel 105. Further, depending on the width of slot 111 in taut strap 110, the movement of beam 106 is limited in the direction of taut strap 110. It may be further understood that taut strap 110 may permit some motion in the direction in the plane of touch-panel 105 either in the direction shown by arrow 122 or 123 by a slight bowing of taut strap 110 between its supporting rollers 114.

Fig. 7 is a cross-sectional view along the lines 7-7 of Fig. 5. In Fig. 7 slot 111 in taut strap 110 is shown as a rectangular opening with beam 106 having the same cross-sectional area. Fingers 94-96 are shown crimped on the far side of taut strap 110. Frame 112 is shown in the background which in this configuration is very similar to a picture frame having uniform thickness and width. Frame 112 may be made of plastic, a composite material or metal.

Strain gauges 36-39 may be positioned on each beam 106 through 109 in a manner similar to beam 12 shown in Figs 1 and 11. to provide an indication of the force applied to each beam 106 through 109.

Fig. 8 is a cross-sectional view of a beam or spring 130 rigidly attached by clip 76 to touch screen 70. In Fig. 8 like references are used for function corresponding to the apparatus of Figs. 3 and 4. The other end of beam 130 is positioned in a notch 132 in frame 134. The end of beam 130 may have a taper 136. If notch 132 has tapered sides at a first angle and if the taper 136 has a second angle smaller than the first angle, then beam 130 may rotate through a third angle, for example, in the range from 0 to 5 degrees, in notch 132 with minimum friction. A strain gauge may be positioned on beam 130 to detect deflections in touch-panel 70 with respect to frame 130. The strain gauge mounting shown in Fig. 8 may be used in combination with other strain gauge mountings shown in this application. The strain gauge mounting shown in Fig. 8 may be suitable for providing a quick release of touch-panel 70.

Fig. 9 shows a touch-panel 145 and frame 149. Beams 137-140 are shown rigidly attached to frame 149. Beams 137-140 extend underneath touch-panel 145 and are in contact with touch-panel 145 to support touch-panel 145. Contact by beams 137-140 may be made for example with an adhesive 141-144 over an elastomeric or polymeric material 150 shown in more detail in Fig. 10.

Fig. 10 shows a cross-sectional view along the lines 10-10 of Fig. 9. Beam 137 may be attached to frame 149 by being glued in a slot 146 to provide rigid attachment. The other end of beam 137 may be attached to a clip 147 having a slot therein 148 for receiving the end of beam 137. Beam 137 may be glued in slot 148. Above clip 147 is positioned a polymeric material 150 having a predetermined hardness. Polymeric material 150 may be for example, foam rubber, rubber, silicone, urethane or polyurethane. Above polymeric material 150 is adhesive 141 which bonds or is glued to touch-panel 145. When touch-panel 145 is depressed, polymeric material 150 deforms with very low resistance to allow the end of beam 137 at clip 147 to rotate freely through a small angle. An example of polymeric material 150 suitable for use is 4026 Scotchmount Double Coated Urethane, 1.59 mm (1/16 inch) thick film tape manufactured by Minnesota Mining and Manufacturing Company, St. Paul, Minnesota. The above 4026 Scotchmount may be further specified by D.C. Part No. 021200-67933. The embodiment shown in Figs. 9 and 10 may provide physical support for touch-panel 145 at all angles vertical or horizontal. Cantilever beams 137-140 are rigidly attached at one end, which may be at either the frame or touch-panel 145 with the other end free to rotate with polymeric material and adhesive holding the cantilever beam to touch-panel 145 or to frame 149 if the rigid end is at the touch-panel 145.

In Fig. 9 strain gauges 36-39 may be mounted on each beam 137-140 to detect the force applied to each beam.

In Figs. 9 and 10, touch-panel 145 may be of the same materials previously described for touch-panel 16 shown in Figs. 1 and 2. Touch-panel 145 may also use flexible elastomeric material, polymeric material, woven fabric of various natural of synthetic materials, fibre glass cloth, metal cloth or mail with glue, clamps, hooks, eyelets, rivets or bolts for fastening the material of touch-panel 145 to the ends of beams 137-140 with or in place of clips 147. A display or image may be positioned behind touch-panel 145.

If flexible material is used for touch-panel 145 there must be adequate clearance or space behind or below touch-panel 145 so that all of the touch force is borne by or transferred to beams 137-140.

Fig. 11 is an enlarged view of a portion of Fig. 1 showing strain gauges 36-39 on beam 12. The strain gauge conductors may be made of constantan, an alloy of copper and nickel, and interconnected with low resistive metal to form a Wheatstone bridge wherein a voltage, such as 5 volts, may be applied to two terminals connected to leads 155 and 157 and the other two terminals connected to leads 156 and 158 or vice versa to provide an output voltage indicative of the force applied to beam 12. The wiring of each strain gauge or extensometer is longitudinal along beam 12 as shown in Fig. 11. One end of strain gauge 36 is connected to strain gauge 38 via lead 155. The other end of strain gauge 36 is coupled to strain gauge 39 via lead 156. The other end of strain gauge 39 is coupled to one end of strain gauge 37 via lead 157. The other end of strain gauge 37 is coupled to other end of strain gauge 38 via lead 158. This connection serves to measure force while cancelling residual moments coupled through the torsion bars. Strain gauges 36-39 may be formed on a polymeric film or insulating layer 152 and glued to beam 12. Alternatively, strain gauges 36-39 may be formed on beam 12 directly with an insulation layer 152 formed first on beam 12 to prevent shorting of strain gauges 36-39 to beam 12.

This arrangement of strain gauge elements is sensitive to the change of curvature with position along the longitudinal axis of the beam, which change would be insensitive to applied moments and is primarly due to force. Such configuration provides additional immunity from frame distortion or mounting inaccuracy.

The signals from the strain gauges indicative of force applied to each respective beam may be used to determine the location and the total force applied to the surface of touch-panel 16. One example of the processing of signals indicative of force from a touch-panel is provided in US-A-4 511 760 which issued on April 16, 1985 to R.L. Garwin and J.L. Levine, the inventors herein, and assigned to the assignee herein entitled "Force Sensing Data Input Device Responding to the Release of Pressure Force". Another example of the processing of signals indicative of force from a touch-panel is provided in US-A-4 745 565 which issued on May 17, 1988 to R.L. Garwin and J.L. Levine, the inventors herein and assigned to the assignee herein entitled "Calibration of a Force Sensing Type of Data Input Device".

## Claims

1. An apparatus for supporting a portion of a touch-panel (16) and for measuring the force at said apparatus due to a force applied to said touch-panel comprising,
a beam (12) extending from said touch-panel (16) having a first (14) and second (18) end, said first end (14) rigidly attached to said touch-panel (16) to cause bending of said beam at times said second end is deflected,
first means comprising a torsion bar (20) or a taut wire (80) or a taut band (110) affixed to a fram (28,86,149) and coupled to said second end (18) for holding said second end at a first position without applying bending moments to said beam greater than a predetermined value at times said force is applied,
said first means permitting said second end (18) to rotate due to bending of said beam (12) at times said force is applied to permit said beam to bend as a cantilever, and
second means for detecting strain in said beam at times said touch-panel moves with respect to said first position due to said applied force.

2. The apparatus of claim 1 further including a support fixture for supporting said first means and third means coupled to said support fixture to permit said first means to be moved in a direction in the plane of said touch-panel (16).

3. The apparatus of claim 1 or 2, further including fourth means coupled to said support fixture and spaced from said touch-panel (16) to limit the distance said touch-panel (16) may be moved whereby said beam and said first means are protected from forces due to acceleration of said touch-panel (16) during shipping.

4. The apparatus of claim 1 to 3, wherein said torsion bar is rectangular in cross-section and has a height at least five times more than its width, or wherein said torsion bar has a longitudinal axis and wherein said second end is connected to said torsion bar on a line passing through said longitudinal axis.

5. The apparatus of claims 1 to 4, wherein said torsion bar (20) has first regions to permit twisting about its longitudinal axis and second regions substantially orthogonal to said first regions to permit bending in a direction substantially orthogonal to said first regions.

6. The apparatus of claim 1 to 5, wherein said substantially taut wire (80) is parallel to the surface of said touch-panel (16).

7. The apparatus of claim 1 to 6, wherein said substantially taut band having a width substantially greater than its thickness affixed to said touch-panel and coupled to said second end.

## Patentansprüche

1. Eine Vorrichtung zum Abstützen eines Teils eines berührungsempfindlichen Bedienfeldes (16) und zum Messen der Kraft an der genannten Vorrichtung aufgrund einer auf das genannte Bedienfeld einwirkenden Kraft, umfassend:
einen Träger (12), der von dem genannten berührungsempfindlichen Bedienfeld (16) ausgeht, mit einem ersten (14) und einem zweiten (18) Ende, wobei das genannte erste Ende (14) starr mit dem genannten berührungsempfindlichen Bedienfeld (16) verbunden ist und eine Biegung des genannten Trägers bewirkt, wenn das genannte zweite Ende durchgebogen wird,
ein erstes Mittel, umfassend einen Torsionsstab (20) oder einen Spanndraht (80) oder ein Spannband (110), die an einem Rahmen (28, 86, 149) befestigt und mit dem genannten zweiten Ende (18) gekoppelt sind, um das genannte zweite Ende in einer ersten Position zu halten, ohne daß Biegemomente auf den genannten Träger einwirken, die zum Zeitpunkt der Krafteinwirkung größer als ein vorher festgesetzter Wert sind,
wobei das genannte erste Mittel eine Drehung des genannten zweiten Endes (18) aufgrund der Durchbiegung des genannten Trägers (12) zum Zeitpunkt der Krafteinwirkung zuläßt, damit sich der genannte Träger als Kragarm biegen kann, und
zweites Mittel zum Messen einer Dehnung in dem genannten Träger, wenn sich das genannte berührungsempfindliche Bedienfeld, bezogen auf die genannte erste Position, durch die genannte Krafteinwirkung bewegt.

2. Die Vorrichtung nach Anspruch 1, weiter umfassend eine Abstützvorrichtung zum Abstützen des genannten ersten Mittels, und ein drittes Mittel, das mit der genannten Abstützvorrichtung gekoppelt ist, damit das genannte erste Mittel in eine Richtung in der Ebene des genannten berührungsempfindlichen Bedienfeldes (16) bewegt werden kann.

3. Die Vorrichtung nach Anspruch 1 oder 2, weiter umfassend ein viertes Mittel, das mit der genannten Abstützvorrichtung gekoppelt ist und zu dem genannten berührungsempfindlichen Bedienfeld (16) einen Abstand aufweist, um die Distanz zu begrenzen, um die das genannte Bedienfeld (16) bewegt werden kann, wodurch der genannte Träger und das genannte erste Mittel gegen Kräfte aufgrund einer Beschleunigung des genannten berührungsempfindlichen Bedienfeldes (16) während des Transports geschützt sind.

4. Die Vorrichtung nach Anspruch 1 bis 3, bei der der genannte Torsionsstab einen rechteckigen Querschnitt und eine Höhe aufweist, die mindestens das Fünffache seiner Breite beträgt, oder bei der der genannte Torsionsstab eine Längsachse hat und bei der das genannte zweite Ende mit dem genannten Torsionsstab auf einer Linie verbunden ist, die durch die genannte Längsachse verläuft.

5. Die Vorrichtung nach Anspruch 1 bis 4, bei der der genannte Torsionsstab (20) erste Bereiche aufweist, die ein Verdrehen des Stabes um seine Längsachse ermöglichen, und zweite Bereiche, die im wesentlichen orthogonal zu den genannten ersten Bereichen liegen, und ein Biegen in eine Richtung erlauben, die im wesentlichen orthogonal zu den genannten ersten Bereichen liegt.

6. Die Vorrichtung nach Anspruch 1 bis 5, bei der der genannte Spanndraht (80) parallel zu der Oberfläche des genannten berührungsempfindlichen Bedienfeldes (16) liegt.

7. Die Vorrichtung nach Anspruch 1 bis 6, bei der das genannte Spannband eine Breite aufweist, die im wesentlichen größer als seine Dicke ist, und mit dem genannten berührungsempfindlichen Bedienfeld verbunden und mit dem genannten zweiten Ende gekoppelt ist.

## Revendications

1. Dispositif destiné à supporter une partie d'un panneau sensible au toucher (16) et à mesurer la force exercée au niveau dudit dispositif en raison d'une force appliquée audit panneau sensible au toucher, comprenant
une poutre (12) s'étendant à partir dudit panneau sensible au toucher (16), présentant une première (14) et une seconde (18) extrémité, ladite première extrémité (14) étant fixée de façon rigide audit panneau sensible au toucher (16) afin de provoquer la flexion de ladite poutre lorsque ladite seconde extrémité est déviée,
un premier moyen comprenant une barre de torsion (20) ou bien un fil métallique tendu (80) ou bien un ruban tendu (110) fixé à un cadre (28, 86, 149) et relié à ladite seconde extrémité (18) afin de maintenir ladite seconde extrémité dans une première position sans appliquer à ladite poutre de moments de flexion supérieurs à une valeur prédéterminée lorsque ladite force est appliquée,
ledit premier moyen permettant à ladite seconde extrémité (18) de pivoter en raison de la flexion de ladite poutre (12) lorsque ladite force est appliquée afin de permettre à ladite poutre de fléchir comme une poutre en porte-à-faux, et
un second moyen destiné à détecter la contrainte dans ladite poutre lorsque ledit panneau sensible au toucher se déplace par rapport à ladite première position en raison de ladite force appliquée.

2. Dispositif selon la revendication 1, comprenant en outre une fixation de support destinée à supporter ledit premier moyen, et un troisième moyen relié à ladite fixation de support afin de permettre audit premier moyen de se déplacer suivant une direction dans le plan dudit panneau sensible au toucher (16).

3. Dispositif selon la revendication 1 ou 2, comprenant en outre un quatrième moyen relié à ladite fixation de support et espacé dudit panneau sensible au toucher (16) afin de limiter la distance sur laquelle ledit panneau sensible au toucher (16) peut être déplacé, grâce à quoi ladite poutre et ledit premier moyen sont protégés vis-à-vis des forces dues à l'accélération dudit panneau sensible au toucher (16) pendant le transport.

4. Dispositif selon les revendications 1 à 3, dans lequel ladite barre de torsion est de section transversale rectangulaire, et présente une hauteur au moins cinq fois supérieure à sa largeur, ou bien dans lequel ladite barre de torsion présente un axe longitudinal, et dans lequel ladite seconde extrémité est reliée à ladite barre de torsion suivant une ligne passant par ledit axe longitudinal.

5. Dispositif selon les revendications 1 à 4, dans lequel ladite barre de torsion (20) comporte des premières régions destinées à permettre sa torsion autour de son axe longitudinal, et des secondes régions pratiquement orthogonales auxdites premières régions destinées à permettre sa flexion dans une direction pratiquement orthogonale auxdites premières régions.

6. Dispositif selon les revendications 1 à 5, dans lequel ledit film métallique pratiquement tendu (80) est parallèle à la surface dudit panneau sensible au toucher (16).

7. Dispositif selon les revendications 1 à 6, dans lequel ledit ruban pratiquement tendu présentant une largeur sensiblement supérieure à son épaisseur est fixé audit panneau sensible au toucher et est relié à ladite seconde extrémité.
